# EUROPEAN PATENT SPECIFICATION

(11) **EP 4 301 628 B1**
(45) Date of publication and mention of the grant of the patent: **01.04.2026**
(21) Application number: 22707426.7
(22) Date of filing: 22.02.2022
(51) Int. Cl.: B60R 19/12, B60R 19/18

(54) **BUMPER AND VEHICLE**
STOSSFÄNGER UND KRAFTFAHRZEUG
PARE-CHOCS ET VÉHICULE

(30) Priority: 03.03.2021 CN 202110233203
(43) Date of publication of application: 10.01.2024
(73) Proprietor: Stellantis Auto SAS, 78300 Poissy (FR)
(72) Inventor: YIN, Junlong, SHANGHAI, 200233 (CN); WANG, Hongri, SHANGHAI, 200233 (CN); JIANG, Huan Jun, SHANGHAI, 200233 (CN); YAN, Jing, SHANGHAI, 200233 (CN); WANG, Liting, SHANGHAI, 200233 (CN)
(74) Representative: BCIP
(86) International application number: PCT/EP2022/054404
(87) International publication number: WO 2022/184506

(56) References cited:
- EP-A2- 1 065 108
- US-B1- 6 874 831

## Description

### FIELD OF TECHNOLOGY

This invention claims the priority of the Chinese patent application 202110233203.5 filed on March 03rd 2021. The present application relates to the field of vehicle components, in particular to a bumper and a vehicle, and more particularly to a bumper capable of ensuring rigidity by being matched with different rear crash beams through a deformable support structure, and a vehicle including the bumper.

### BACKGROUND

A bumper assembly of a vehicle, as an important part of a vehicle body, includes a bumper and a rear crash beam arranged inside the bumper, and the rigidity of the bumper directly affects a driving safety of the vehicle. When a front of the vehicle is impacted by a low-speed crash or other external loads, the bumper can buffer and absorb the impact energy from the outside, thereby protecting the vehicle, as well as playing a vital role in the protection of occupants and pedestrians outside the vehicle.

In the international community, each country has different requirements for the performance indicators of the rear crash beam in the bumper assembly. Therefore, it is necessary to design various rear crash beams to meet the requirements. For example, some rear crash beams have a rear bumper body design with greater height, while in other designs, the rear bumper body is lower.

In contrast, bumper rigidity requirement is same for all countries s. For the rigidity of the bumper, a specified pressure is usually applied to a specific area of the bumper, and the rigidity standard is determined based on the amount of displacement that occurs when the force is applied. The larger the displacement, the worse the rigidity performance, and vice versa.

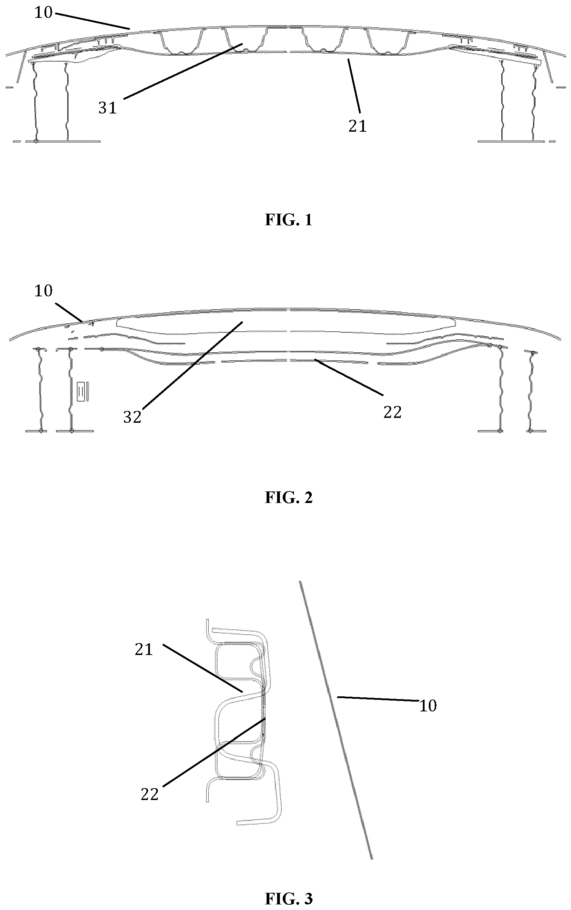

In order to ensure the rigidity of the bumper, reinforcement is required behind the bumper skin so that the bumper is supported by the rear impact beam through the reinforcement member. For reinforcement members, two existing implementation methods are generally provided. In a first method, as shown in FIG 1, an elastic reinforcing block 31 is arranged between the bumper 10 and the rear crash beam 21, which is matched with the front surface of the rear crash beam 21, so that the bumper 10 is supported by the close contact between the bumper 10 and the rear crash beam 21. In a second method, as shown in FIG 2, reinforcement is achieved by arranging a buffer foam 32 between the bumper 10 and the rear crash beam 22, which is matched with the rear crash beam 22, thereby ensuring the rigidity of the bumper.

However, when the rear crash beams 21 and 22 with different designs are placed at the same position on the rear side of the bumper 10, as shown in FIG 3, the distances between the different rear crash beams 21 and 22 and the bumper are different, therefore, it is difficult to meet the support requirements between various rear crash beams 21, 22 and the bumper through a general reinforcement design, such as a general elastic reinforcing block 31 or a general foam. Thus, it is difficult to secure the rigidity of the bumper. In addition, designing specific reinforcement members for each type of rear bumper may increase production costs. EP 1 065 108 A2 discloses a bumper beam according to the preamble of claim 1.

### SUMMARY

### (I) Technical problems to be solved

A first objective of the present application is to provide a bumper with a common support member capable of being matched with various rear crash beams, so as to solve the technical problem that existing reinforcement members cannot be matched with various rear crash beams and thus it is difficult to meet the rigidity of the bumper.

A second objective of the present application is to provide a vehicle including a bumper with a common support member capable of being matched with various rear crash beams, so as to solve the technical problem that existing reinforcement members cannot be matched with various rear crash beams and thus it is difficult to meet the rigidity of the bumper.

### (II) Technical solutions

In order to solve at least the above-mentioned technical problem, the present application provides a bumper, including: a bumper body; a lower flange having a side connected to the bumper body and being formed by extending from the bumper body toward a rear of a vehicle; and an extension portion, formed by extending downward from another side of the lower flange, and provided with a plurality of deformable support structures for abutting a rear crash beam in a direction toward a front of the vehicle; wherein, each of the plurality of deformable support structures is selectively in close contact with the rear crash beam according to the structure of the rear crash beam.

According to the invention, the deformable support structure includes: a through-hole portion, penetrating the extension portion to form a hollow structure protruding in a direction toward the front of the vehicle; and a support portion, formed by protruding from an inner surface of the through-hole portion in a direction toward the front of the vehicle, and covering at least a part of the hollow structure of the through-hole portion.

In an embodiment, the support portion further includes: two connection portions, wherein each connection portion has an end respectively extending from opposite positions in the inner surface of the through-hole portion in a direction toward the front of the vehicle; and a contact portion, connected between another ends of the two connection portions.

In an embodiment, the contact portion is formed in a curved shape protruding in a direction toward the front of the vehicle.

In an embodiment, the through-hole portion is formed in a cylindrical shape, and the support portion is provided along a diameter direction of the through-hole portion.

In an embodiment, an area of the support portion projected on the through-hole portion is 1/3 of an area of the through-hole portion.

In an embodiment, the plurality of deformable support structures are arranged on the extension portion in at least two rows.

In an embodiment, the bumper further includes: a pair of auxiliary support portions, respectively formed on both sides of the extension portion to assist in supporting the bumper by contacting the rear crash beam.

In an embodiment, the bumper body, the extension portion and the lower flange are integrally formed.

The present application provides a vehicle, including the bumper according to the embodiments of the present application.

### (III) Beneficial effects

The present application provides a bumper, including: a bumper body; a lower flange, one side of which is connected to the bumper body, formed by extending from the bumper body toward a rear of a vehicle; and an extension portion, formed by extending downward from the other side of the lower flange, and formed with a plurality of deformable support structures for abutting a rear crash beam in a direction toward a front of the vehicle; wherein, each of the plurality of deformable support structures is selectively in close contact with the rear crash beam according to the structure of the rear crash beam. Through a plurality of deformable support structures, the bumper according to the present application can be matched with various rear crash beams of different designs without additional special reinforcement members, so that the manufacturing cost can be saved while ensuring the rigidity of the bumper.

### BRIEF DESCRIPTION OF THE DRAWINGS

The above-mentioned and other objectives, features and other advantages of the present disclosure will be more clearly understood from the following detailed description, taken in conjunction with the accompanying drawings, wherein:
FIG 1 is a cross-sectional view from a width direction of a vehicle body showing a method of supporting a bumper through an elastic reinforcing block according to a prior-art rear crash beam;
FIG 1 is a cross-sectional view from a width direction of a vehicle body showing a method of supporting a bumper through a buffer foam according to a prior-art rear crash beam;
FIG 3 is a cross-sectional view from a length direction of a vehicle body showing positional relationships between different rear crash beams and a conventional bumper;
FIG 4 is a schematic diagram of a bumper according to an embodiment of the present application;
FIG 5 is a schematic diagram showing a lower flange and an extension portion according to an embodiment of the present application;
FIG 6 is a cross-sectional view from a length direction of a vehicle body showing positional relationships of different rear crash beams and a bumper according to an embodiment of the present application; and
FIG 7 is a schematic diagram showing a deformable support structure according to an embodiment of the present application;

### Reference Numerals:

10 and 11: bumper; 111: bumper body; 112: lower flange; 113: extension portion; 1131: deformable support structure; 1132: through-hole portion; 1133: support portion; 1134: connection portion; 114: auxiliary support portion; 21 and 22: rear crash beam; 31: elastic reinforcing block; 32: buffer foam.

### DETAILED DESCRIPTION

In order to make the objectives, technical solutions and advantages of the embodiments of the present application more clear, the technical solutions in the embodiments of the present application will be clearly and completely described below in conjunction with the accompanying drawings in the embodiments of the present application. The described embodiments are some embodiments of the present application, but not all embodiments. Based on the embodiments of the present application, all other embodiments obtained by those of ordinary skill in the art without creative work fall within the protection scope of the present application.

In the description of the present application, it should be noted that, the orientation or positional relationship indicated by terms "center", "longitudinal", "lateral", "upper", "lower", "front", "rear", "left", "right", "vertical", "horizontal", "top", "bottom", "inner", and "outer" are based on the orientation or positional relationship shown in the accompanying drawings, and are only for the convenience of describing the present application and description simplification, rather than to indicate or imply that the device or element referred to should have a particular orientation, be constructed and operated in a particular orientation, and therefore should not be construed as limiting the present application. Furthermore, the terms "first", "second", "third" and the like are used for descriptive purposes only and should not be construed as indicating or implying relative importance.

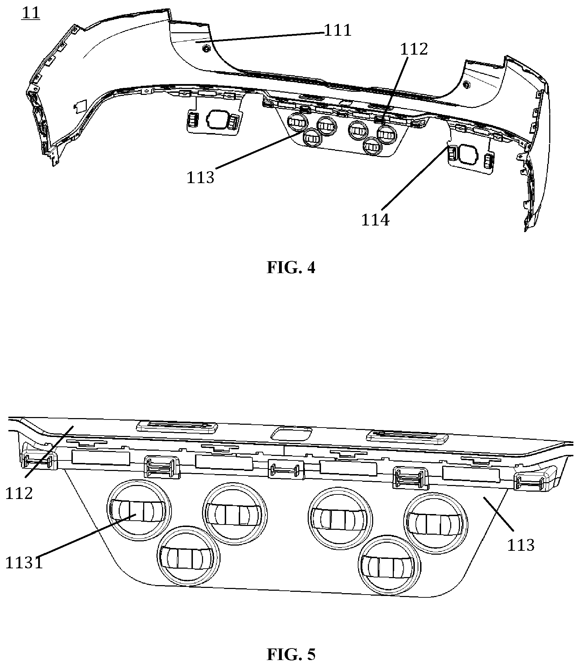

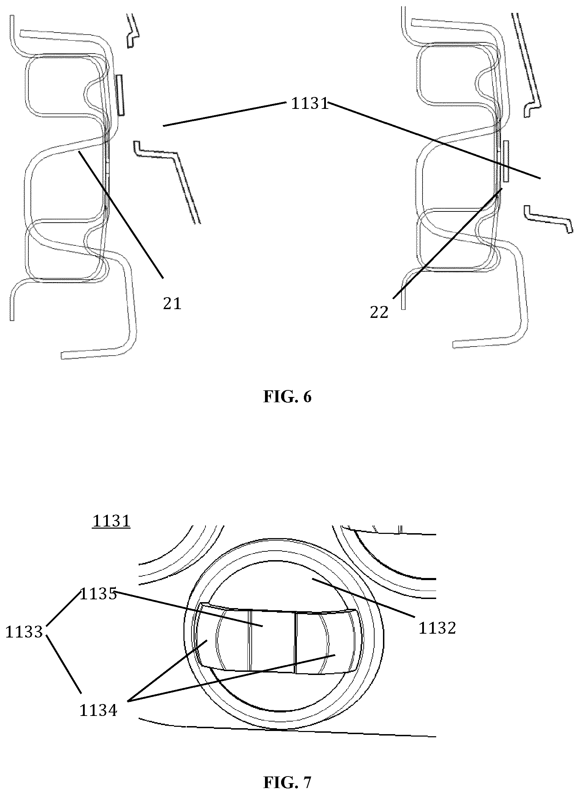

FIG 4 is a schematic diagram of a bumper according to an embodiment of the present application; FIG 5 is a schematic diagram showing a lower flange and an extension portion according to an embodiment of the present application; FIG 6 is a cross-sectional view from a length direction of a vehicle body showing positional relationships of different rear crash beams and a bumper according to an embodiment of the present application.

An embodiment of the present application provides a bumper 11, including: a bumper body 111; a lower flange 112 having a side connected to the bumper body 111 and being formed by extending from the bumper body 111 toward a rear of a vehicle; and an extension portion 113, formed by extending downward from another side of the lower flange 112, and formed with a plurality of deformable support structures 1131 for abutting a rear crash beam in a direction toward a front of the vehicle; wherein, each of the plurality of deformable support structures 1131 is selectively in close contact with the rear crash beam according to the structure of the rear crash beam.

Specifically, the side of the lower flange 112 is formed by protruding from a bottom of the bumper body 111 toward the rear of the vehicle, and another side of the lower flange 112, i.e., an extension end, extends downward to form the extension portion 113. In an embodiment, the lower flange 112 may extend perpendicular to the bumper body 111 toward the rear of the vehicle, and the extension portion 113 may extend downward perpendicular to a plane formed by the extension portion 113, namely, the plane formed by the extension portion 113 may be parallel to the plane formed by the bumper body 111.

Further, a plurality of deformable support structures 1131 may be formed on the extension portion 113, and the plurality of deformable support structures 1131 may selectively closely abut against the rear crash beam located on an inner side of the bumper 11, so as to support the bumper 11. In this case, the plurality of deformable support structures 1131 are used to match various crash beams of different designs, therefore the size and shape of each of the plurality of deformable support structures 1131 may be different. Each of the plurality of deformable support structures 1131 provided in the embodiment of the present application has the same shape and size, and the plurality of deformable support structures 1131 are formed in two rows parallel to each other on the extension portion 113. However, the present application is not limited to this.

In the bumper 11 according to an embodiment of the present application, two rows of the plurality of deformable support structures 1131 are formed on the extension portion 113. In an embodiment, the plurality of deformable support structures 1131 in the upper row may be in close contact with the rear crash beam, and the bumper 11 is supported by the plurality of deformable support structures 1131 in the upper row, thereby ensuring the rigidity of the bumper 11. The plurality of deformable support structures 1131 in the lower row can be in close contact with the rear crash beam, and the bumper 11 is supported by the plurality of deformable support structures 1131 in the lower row, thereby ensuring the rigidity of the bumper 11. Therefore, when the bumper 11 according to the embodiment of the present application is employed, the bumper 11 can be supported by the plurality of deformable support structures 1131 on the extension portion 113 without additional reinforcement members, so that the bumper 11 can meet the rigidity requirements thereof.

More specifically, each of the plurality of deformable support structures 1131 according to the invention include a through-hole portion 1132, and a support portion 1133 formed by protruding from the through-hole portion 1132 toward the front of the vehicle.

A hollow structure protruding in the direction toward the front of the vehicle is formed by the through-hole portion 1132 penetrating the extension portion 113 on the surface of the extension portion 113. The projected shape of the through-hole portion 1132 on the extension portion 113 may be a circle, and correspondingly, the space formed by the through-hole portion 1132 penetrating the extension portion 113 may be a cylinder. In such way, the support portion 1133 is disposed along the diameter of the through-hole portion 1132. However, the present application is not limited to this, the projected shape of the through-hole portion 1132 on the extension portion 113 may also be a square or the like, and correspondingly, the space formed by penetrating the extension portion 113 may be a rectangular parallelepiped, and the support portion 1133 may also be disposed along the diagonal line or the length of one side of the through-hole portion 1132. In addition, the support portion 1133 according to the embodiment of the present application may be formed to protrude from the inner surface of the through-hole portion 1132 toward the front of the vehicle and cover at least a part of the hollow structure of the through-hole portion 1132. Moreover, the extension portion 113 may be formed by protruding from the outer surface of the extension portion 113 through the through-hole portion 1132 toward the front of the vehicle; alternatively, the extension portion 113may be formed by protruding toward the front of the vehicle from a position close to the through-hole portion 1132 in the inner surface of the extension portion 113 without passing through the through-hole portion 1132.

Further, the support portion 1133 may further include two connection portions 1134 and a contact portion 1135, wherein one end of each connection portion 1134 may be respectively connected to positions opposite to each other in the inner surface of the through-hole portion 1132, and formed by extending toward the front of the vehicle. Alternatively, one end of the two connection portions 1134 may be connected to the positions opposite to each other on the outer surface of the extension portion 113, and the connection portions 1134 are formed by extending toward the front of the vehicle from the through-hole portion 1132; or the connection portions 1134 are connected to the inner surface of the extension portion 113 at a positions close to the through-hole portion 1132 and opposite to each other, and are formed without extending toward the front of the vehicle from the through-hole portion 1132. The contact portion 1135 is connected between the other ends of the two connection portions 1134, so that the two connection portions 1134 and the contact portion 1135 are connected as a whole. Therefore, the two connection portions 1134 and the contact portion 1135 preferably have the same width. The contact portion 1135 is used to tightly abut against the rear crash beam, and the rear crash beam can support the bumper 11 by tightly abutting against the plurality of contact portions 1135. Alternatively, the contact portion 1135 may be formed in a curved shape protruding toward the front of the vehicle.

In order to support the bumper 11 through a plurality of deformable support structures 1131 for the rear crash beams of various designs, in the deformable support structure 1131, a part of the support portion 1133 that is in close contact with the rear crash beam, i.e., the contact portion 1135, as well as the two connection portions 1134 connected with the contact portion 1135 should be deformable under a certain degree of force. If the widths of the two connection portions 1134 and the contact portion 1135 are excessive, the rigidity of the support portion 1133 will be excessive, which may cause difficulty in assembly, namely cause damage to the crash beam and the bumper 11 due to the abutment of the support portion 1133 and the crash beam. If the widths of the two connection portions 1134 and the contact portion 1135 are insufficient, the rigidity of the supporting portion 1133 will be insufficient, and thus the support portion 1133 may be affected by the rear crash beam during installation and may be deformed excessively, thus failing to support the bumper 11 well. Therefore, in order to balance the deformability and rigidity of the deformable support structure 1131, preferably, the widths of the two connection portions 1134 and the contact portion 1135 are set so that an area of the support portion 1133 projected on the through-hole portion 1132 is 1/3 of an area of the through-hole portion 1132.

In an embodiment, the bumper 11 may further include a pair of auxiliary support portions 114, which are also formed by extending from the lower part of the bumper body 111 and located on the left and right sides of the extension portion 113 respectively. Each auxiliary support portion 114 is in close contact with the rear crash beam respectively, namely, each auxiliary support portion 114 is equivalent to an additional deformable support structure 1131. The bumper 11 can be supported in a more balanced and effective manner by the multiple deformable support structures 1131 on the extension portion 113 and the pair of auxiliary support portions 114 on both sides of the extension portion 113 closely abutting the rear crash beam.

In an embodiment, the bumper body 111, the extension portion 113, and the lower flange 112 are integrally formed, or the bumper body 111, the extension portion 113, the lower flange 112, and the pair of auxiliary support portions 114 are integrally formed. Therefore, the bumper 11 can be directly manufactured in the production line by the same process as the existing ones, without additional process steps.

In another aspect, the present application further provides a vehicle, including the bumper according to the embodiments of the present application, so that the vehicle can be matched with various rear crash beams of different designs without providing additional reinforcement members, thereby, the bumper is supported and the rigidity of the bumper is ensured.

In conclusion, the present application provides a bumper, including: a bumper body; a lower flange having a side connected to the bumper body and being formed by extending from the bumper body toward a rear of a vehicle; and an extension portion, formed by extending downward from the other side of the lower flange, and formed with a plurality of deformable support structures for abutting a rear crash beam in a direction toward a front of the vehicle; wherein, each of the plurality of deformable support structures is selectively in close contact with the rear crash beam according to the structure of the rear crash beam. Through a plurality of deformable support structures, the bumper according to the present application can be matched with various rear crash beams of different designs to support the bumper without additional special reinforcement members, so that the manufacturing cost can be saved while ensuring the rigidity of the bumper.

Finally, it should be noted that the above embodiments are only used to illustrate the technical solutions of the present application, but not to limit the present application; although the present application has been described in detail with reference to the foregoing embodiments, those skilled in the art should understand that the technical solutions described in the foregoing embodiments can be modified and these modifications will not make the corresponding technical solutions depart from the scope of the technical solutions of the embodiments of the present application.

## Claims

1. A bumper, comprising:
a bumper body;
a lower flange having a side connected to the bumper bodyand being formed by extending from the bumper body toward a rear of a vehicle; and
an extension portion, formed by extending downward from the other side of the lower flange, and provided with a plurality of deformable support structures for abutting a rear crash beam in a direction toward a front of the vehicle;
each of the plurality of deformable support structures is selectively in close contact with the rear crash beam based on the structure of the rear crash beam,
**characterized in that** the deformable support structure comprises:
a through-hole portion, penetrating the extension portion to form a hollow structure protruding in a direction toward the front of the vehicle; and
a support portion, formed by protruding from an inner surface of the through-hole portion in a direction toward the front of the vehicle, and covering at least a part of the hollow structure of the through-hole portion.

2. The bumper of claim 1, wherein
the support portion further comprises:
two connection portions, wherein an end of each connection portion respectively extends from opposite positions in the inner surface of the through-hole portion in a direction toward the front of the vehicle; and
a contact portion, connected between the other ends of the two connection portions.

3. The bumper of claim 2, wherein
the contact portion is formed in a curved shape protruding in a direction toward the front of the vehicle.

4. The bumper of claim 3, wherein
the through-hole portion is formed in a cylindrical shape, and the support portion is provided along a diameter direction of the through-hole portion.

5. The bumper of claim 4, wherein
an area of the support portion projected on the through-hole portion is 1/3 of an area of the through-hole portion.

6. The bumper of claim 1, wherein
the plurality of deformable support structures are arranged on the extension portion in at least two rows.

7. The bumper of claim 1, further comprising:
a pair of auxiliary support portions, respectively formed on both sides of the extension portion to assist in supporting the bumper by contacting the rear crash beam.

8. The bumper of claim 1, wherein
the bumper body, the extension portion and the lower flange are integrally formed.

9. A vehicle, comprising the bumper of any one of claims 1 to 8.

## Patentansprüche

1. Ein Stoßfänger, umfassend: einen Stoßfängerkörper; einen unteren Flansch, dessen eine Seite mit dem Stoßfängerkörper verbunden ist und der sich vom Stoßfängerkörper in Richtung des Fahrzeughecks erstreckt; und einen Verlängerungsabschnitt, der sich von der anderen Seite des unteren Flansches nach unten erstreckt und mit mehreren verformbaren Stützstrukturen versehen ist, die an einem hinteren Aufprallträger in Richtung der Fahrzeugfront anliegen; wobei jede der verformbaren Stützstrukturen je nach Struktur des hinteren Aufprallträgers selektiv in engem Kontakt mit diesem steht; **dadurch gekennzeichnet, dass** die verformbare Stützstruktur Folgendes umfasst: einen Durchgangslochabschnitt, der den Verlängerungsabschnitt durchdringt und eine Hohlstruktur bildet, die in Richtung der Fahrzeugfront ragt; und einen Stützabschnitt, der von einer Innenfläche des Durchgangslochabschnitts in Richtung der Fahrzeugfront ragt und mindestens einen Teil der Hohlstruktur des Durchgangslochabschnitts abdeckt.

2. Stoßfänger nach Anspruch 1, wobei der Stützbereich ferner Folgendes umfasst: zwei Verbindungsabschnitte, wobei sich jeweils ein Ende jedes Verbindungsabschnitts von gegenüberliegenden Positionen in der Innenfläche des Durchgangslochabschnitts in Richtung der Fahrzeugfront erstreckt; und einen Kontaktbereich, der zwischen den anderen Enden der beiden Verbindungsabschnitte verbunden ist.

3. Stoßfänger nach Anspruch 2, wobei der Kontaktbereich eine gekrümmte Form aufweist und in Richtung der Fahrzeugfront vorsteht.

4. Stoßfänger nach Anspruch 3, wobei der Durchgangslochabschnitt eine zylindrische Form aufweist und der Stützbereich entlang des Durchmessers des Durchgangslochabschnitts angeordnet ist.

5. Stoßfänger nach Anspruch 4, wobei die auf den Durchgangslochabschnitt projizierte Fläche des Stützbereichs ein Drittel der Fläche des Durchgangslochabschnitts beträgt.

6. Stoßfänger nach Anspruch 1, wobei die Vielzahl der verformbaren Stützstrukturen auf dem Verlängerungsabschnitt in mindestens zwei Reihen angeordnet ist.

7. Der Stoßfänger nach Anspruch 1, ferner umfassend: zwei Hilfsstützabschnitte, die jeweils beidseitig des Verlängerungsabschnitts ausgebildet sind und den Stoßfänger durch Kontakt mit dem hinteren Aufprallträger stützen.

8. Der Stoßfänger nach Anspruch 1, wobei der Stoßfängerkörper, der Verlängerungsabschnitt und der untere Flansch einstückig ausgebildet sind.

9. Ein Fahrzeug, umfassend den Stoßfänger nach einem der Ansprüche 1 bis 8.

## Revendications

1. Pare-chocs comprenant : un corps de pare-chocs ; une bride inférieure, reliée au corps de pare-chocs par un côté et formée par extension du corps de pare-chocs vers l'arrière du véhicule ; et une partie d'extension, formée par extension vers le bas depuis l'autre côté de la bride inférieure et munie de plusieurs structures de support déformables destinées à s'appuyer contre une traverse de protection arrière en direction de l'avant du véhicule ; chacune des structures de support déformables est en contact étroit et sélectif avec la traverse de protection arrière en fonction de la structure de celle-ci, **caractérisée en ce que** la structure de support déformable comprend : une partie traversante, traversant la partie d'extension pour former une structure creuse faisant saillie vers l'avant du véhicule ; et une partie de support, formée par saillie depuis la surface intérieure de la partie traversante en direction de l'avant du véhicule et recouvrant au moins une partie de la structure creuse de la partie traversante.

2. Pare-chocs selon la revendication 1, dans lequel la partie de support comprend en outre : deux parties de connexion, dont une extrémité s'étend à partir de positions opposées sur la surface intérieure de la partie traversante, en direction de l'avant du véhicule ; et une partie de contact, reliant les autres extrémités des deux parties de connexion.

3. Pare-chocs selon la revendication 2, dans lequel la partie de contact est de forme incurvée et fait saillie vers l'avant du véhicule.

4. Pare-chocs selon la revendication 3, dans lequel la partie traversante est de forme cylindrique et la partie de support est disposée le long du diamètre de la partie traversante.

5. Pare-chocs selon la revendication 4, dans lequel la surface de la partie de support projetée sur la partie traversante est égale à 1/3 de la surface de la partie traversante.

6. Pare-chocs selon la revendication 1, dans lequel les structures de support déformables sont disposées sur la partie d'extension sur au moins deux rangées.

7. Le pare-chocs selon la revendication 1, comprenant en outre : deux parties de support auxiliaires, formées de part et d'autre de la partie d'extension, afin de contribuer au maintien du pare-chocs par contact avec la traverse de protection arrière.

8. Le pare-chocs selon la revendication 1, dans lequel le corps du pare-chocs, la partie d'extension et la bride inférieure sont formés d'une seule pièce.

9. Un véhicule comprenant le pare-chocs selon l'une quelconque des revendications 1 à 8.
